# EUROPEAN PATENT APPLICATION

(11) **EP 2 254 395 A1**
(43) Date of publication of application: **24.11.2010**
(21) Application number: 10005142.4
(22) Date of filing: 17.05.2010
(51) Int. Cl.: H05B 37/02, G08B 13/19, G08B 29/26

(54) **Illumination apparatus**

(30) Priority: 20.05.2009 JP 2009122395
(71) Applicant: Panasonic Electric Works Co., Ltd., Kadoma-shi Osaka (JP)
(72) Inventor: Sobagaki, Tamami, Kadoma-shi Osaka (JP); Gotou, Shigeo, Kadoma-shi Osaka (JP); Murakami, Tadasi, Kadoma-shi Osaka (JP)
(74) Representative: Samson & Partner

(57) **Abstract**

An illumination apparatus includes a lamp load; a lighting circuit unit for turning on the lamp load; a sensor unit; an amplifier circuit unit for; a control unit for controlling the lighting circuit unit to turn on or off the lamp load depending on presence or absence of a human body; and a power supply unit. The control unit determines that a human body is present when a voltage of the amplified detection signal exceeds a first threshold voltage while the lighting circuit unit is not operated and the lamp load is turned off, and determines that a human body is present if a voltage of the amplified detection signal exceeds a second threshold voltage while the lighting circuit unit is operated and the lamp load is turned on, a magnitude of the second threshold voltage being set to be higher than a magnitude of the first threshold voltage.

## Description

### Field of the Invention

The present invention relates to an illumination apparatus, which turns on or off a lamp load depending on the presence or absence of a human body.

### Background of the Invention

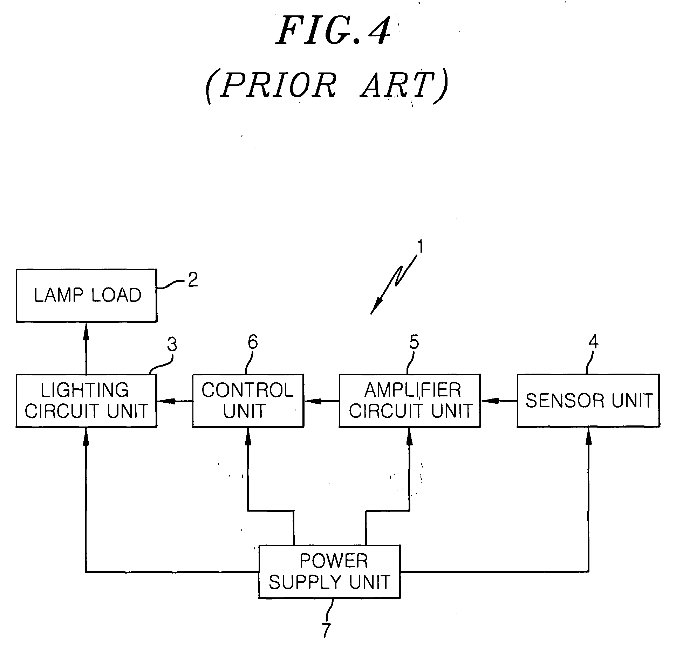

Conventionally, there are known various illumination apparatuses that turn on or off a lamp load depending on the presence or absence of a human body (see, e.g., Japanese Patent Application Publication No. H8-96968). As one of the illumination apparatuses, there is an illumination apparatus 1 shown in Fig. 4. The illumination apparatus 1 may include a lamp load 2 formed of, e.g., a fluorescence lamp or an LED, a lighting circuit unit 3 for turning on the lamp load 2, a sensor unit 4, an amplifier circuit unit 5, a control unit 6 and a power supply unit 7.

The sensor unit 4 may be configured as a superconducting sensor, a Doppler sensor, an ultrasonic sensor or the like. The sensor unit 4 detects a physical quantity whose value varies in accordance with the presence or movement of a human body and outputs a detection signal having a voltage level corresponding to the physical quantity. For example, the sensor unit 4 configured as a superconducting sensor detects, as a physical quantity, an infrared ray in a monitored region, which is varied by an infrared ray emitted from a human body. Further, the sensor unit 4 configured as a Doppler sensor or an ultrasonic sensor compares a frequency of a transmitted microwave or ultrasonic wave with a frequency of a reflection wave reflected from a moving human body and detects, as a physical quantity, a frequency difference varied by a Doppler effect.

The amplifier circuit unit 5 amplifies the detection signal outputted from the sensor unit 4 and outputs the amplified detection signal to the control unit 6. If a voltage of the amplified detection signal exceeds a predetermined threshold voltage, the control unit 6 determines that a human body is present and controls the lighting circuit unit 3 to turn on the lamp load 2. If the voltage of the amplified detection signal does not exceed the predetermined threshold voltage, the control unit 6 determines that no human body is present and controls the lighting circuit unit 3 to turn off the lamp load 2. The power supply unit 7 supplies operation power produced by a commercial power source to each unit.

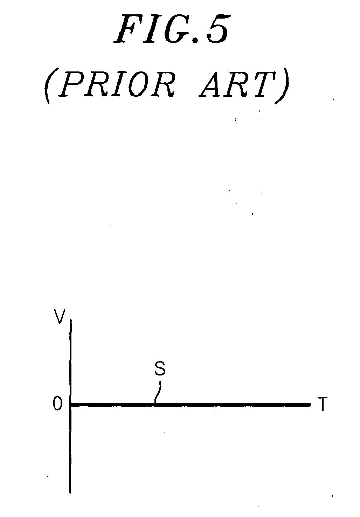

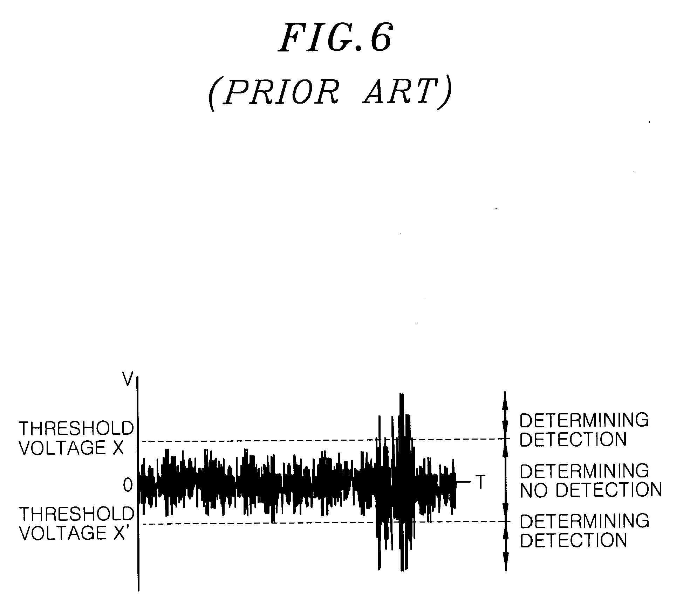

Hereinafter, a basic operation of the illumination apparatus 1 will be described. First, the sensor unit 4 is constantly operated to output a detection signal as represented by a solid line `S' in Fig. 5. However, a voltage (amplitude) level of the detection signal is very small as shown in Fig. 5 and, thus, it is difficult for the control unit 6 to make a judgment on the presence or absence of a human body based on that. Accordingly, the detection signal is amplified by the amplifier circuit unit 5 as shown in Fig. 6. The amplified detection signal of the sensor unit 4 has positive and negative amplitudes with respect to a reference potential as shown in Fig. 6. Further, threshold voltages X and X' are respectively set in positive and negative voltage levels as represented by dotted lines in Fig. 6, and the threshold voltages X and X' have the same magnitude.

Further, if the voltage of the amplified detection signal exceeds the threshold voltages X and X' (that is, the magnitude of the voltage of the amplified detection signal is greater than the magnitude of the threshold voltage X or X'), the control unit 6 determines that a human body is present in the monitored region of the sensor unit 4, and transmits a turn-on control signal to the lighting circuit unit 3. When the lighting circuit unit 3 receives the turn-on control signal, it turns on the lamp load 2. If the voltage of the amplified detection signal does not exceed the threshold voltages X and X' any longer after a moment later since the lamp load 2 is turned on, the control unit 6 determines that no human body is present and transmits a turn-off control signal to the lighting circuit unit 3. When the lighting circuit unit 3 receives the turn-off control signal, it turns off the lamp load 2 or turns on the lamp load 2 to a low illumination level.

Further, the control unit 6 samples the detection signal outputted from the amplifier circuit unit 5 in a predetermined sampling cycle and performs A/D conversion on the sampled detection signal to obtain a digital value. Then, the control unit 6 determines whether the digital value exceeds the threshold voltages X and X' and controls the lighting circuit unit 3 based on the determination. Further, the control unit 6 does not immediately turn off the lamp load 2 even when the control unit 6 determines that no human body is present any more while the lamp load 2 is turned on. The control unit 6 sets a turn-on time (e.g., one minute) and counts down from that time. That is, the lamp load 2 remains turned on during the turn-on time and is turned off when the turn-on time is counted down to zero. However, when the control unit 6, detects a human body within the turn-on time, the control unit 6 retriggers the turn-on time.

However, since the power supply unit 7 of the illumination apparatus 1 is connected to each unit in parallel, when a noise is generated in a certain circuit, the noise is transmitted via the power supply unit 7 to thereby overlap with a detection signal outputted from the amplifier circuit unit 5 to the control unit 6. As a result, the voltage of the amplified detection signal can exceed the threshold voltages X and X' due to the result of its overlap with the noise even when there is no human body present, thereby causing a detection error. In order to solve this problem, conventionally, a filter is used to remove a noise component. However, in a case where the sensor unit 4 is a Doppler sensor, a detection signal outputted from the Doppler sensor is very small and the amplifier circuit unit 5 is required to have a high amplification factor. In this case, when the signal component is amplified, the noise component reduced by the filter is also amplified. Consequently, in addition to the use of the filter, the threshold voltage may have to be set to a level high enough to prevent the detection error.

However, in the conventional illumination apparatus 1, particularly, the lighting circuit unit 3 may serve as a noise source. The noise overlapped with the output of the amplifier circuit unit 5 while the lighting circuit unit 3 is operated is larger than the noise overlapped while the lighting circuit unit 3 is not operated. Accordingly, the threshold voltage is set based on only either one of the turn-on and the turn-off state of the lamp load 2, it is difficult to accurately determine the presence of a human body.

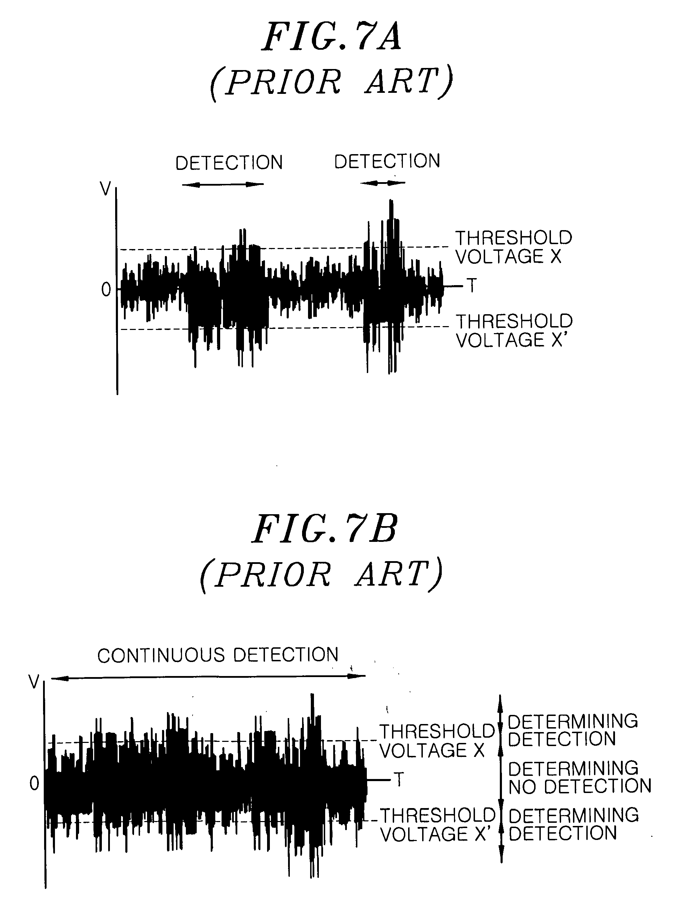

Specifically, when the threshold voltages X and X' are set based on the magnitude of the noise overlapped with the signal while the lamp load 2 is turned off, a detection error can be prevented during the turn-off state of the lamp load 2 as shown in Fig. 7A. However, as shown in Fig. 7B, during the turn-on state of the lamp load 2, the noise and the detection signal overlap with each other to exceed the threshold voltages X and X' even when no human body is present, thereby causing a detection error.

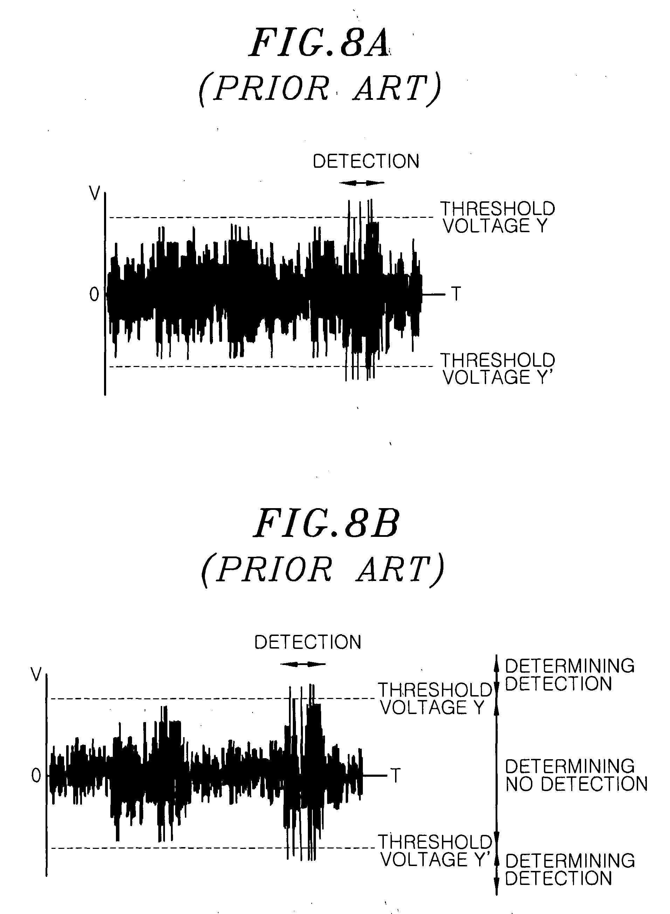

On the other hand, when the magnitudes of the threshold voltages Y and Y' are set to be higher than the magnitudes of the threshold voltages X and X' based on the magnitude of the noise overlapped with the signal during the turn-on state of the lamp load 2, a detection error can be prevented during the turn-on of the lamp load 2 as shown in Fig. 8A. However, as shown in Fig. 8B, while the lamp load 2 is turned off, the detection signal does not exceed the threshold voltages Y and Y' even when a human body is present, thereby deteriorating detection sensitivity.

### Summary of the Invention

In view of the above, the present invention provides an illumination apparatus having improved reliability to more accurately determine the presence of a human body regardless of the turn-on and turn-off states of a lamp load In accordance with an embodiment of the present invention, there is provided an illumination apparatus including: a lamp load; a lighting circuit unit for turning on the lamp load; a sensor unit for detecting a physical quantity varying based on presence or movement of a human body to output a detection signal having a voltage level corresponding to the physical quantity; an amplifier circuit unit for amplifying the detection signal; a control unit for controlling the lighting circuit unit to turn on or off the lamp load depending on presence or absence of a human body; and a power supply unit for supplying power to each of the units.

Herein, the control unit determines that a human body is present when a voltage of the amplified detection signal exceeds a first threshold voltage while the lighting circuit unit is not operated and the lamp load is turned off, and determines that a human body is present if a voltage of the amplified detection signal exceeds a second threshold voltage while the lighting circuit unit is operated and the lamp load is turned on, a magnitude of the second threshold voltage being set to be higher than a magnitude of the first threshold voltage.

In accordance with the embodiment of the present invention, the control unit determines that a human body is present if a voltage of the amplified detection signal exceeds the first threshold voltage while the lighting circuit unit is not operated and the lamp load is turned off. Further, the control unit determines that a human body is present if a voltage of the amplified detection signal exceeds the second threshold voltage while the lighting circuit unit is operated and the lamp load is turned on. A magnitude of the second threshold voltage is set to be higher than a magnitude of the first threshold voltage, and the threshold voltage is shifted between the first and second threshold voltages depending on the status of the turn-on/off of the lamp load. Accordingly, it is possible to prevent a detection error from occurring in the turn-on state and prevent detection sensitivity from deteriorating in the turn-off state. Therefore, it is possible to more accurately determine the presence of a human body regardless of the status of the turn-on and turn-off of the lamp load, thereby improving reliability.

The control unit may determine that a human body is present if a voltage of the amplified detection signal exceeds the second threshold voltage regardless of a status of turn-on and turn-off of the lamp load during a specific time period after the power supply unit begins to supply power to each of the units.

In accordance with the embodiment of the present invention, the control unit determines that a human body is present if a voltage of the amplified detection signal exceeds the second threshold voltage regardless of the status of the turn-on and turn-off of the lamp load during a specific time period after the power supply unit begins to supply power to each unit. Accordingly, it is possible to prevent a detection error caused by the noise increasing temporarily for the specific time period.

The present invention provides an effect of improving reliability by accurately determining the presence of a human body regardless of the status of the turn-on and turn-off of the lamp load.

### Brief Description of the Drawings

The objects and features of the present invention will become apparent from the following description of embodiments, given in conjunction with the accompanying drawings, in which:
Fig. 1 is a timing chart showing variations over elapsed time, wherein (a) to (d) of Fig. 1 show variations depending on whether a human body is present or no present in a monitored region in accordance with the embodiment of the present invention;
Figs. 2A and 2B represent characteristics of voltage variation of a signal outputted from an amplifier circuit unit over elapsed time in accordance with the present embodiment, wherein Fig. 2A shows voltage variation while a lamp load is turned off and Fig. 2B shows voltage variation while the lamp load is turned on;
Fig. 3 is a timing chart immediately after a power supply unit begins to supply power to each unit in accordance with the present embodiment;
Fig. 4 is a block diagram showing one example of a conventional illumination apparatus;
Fig. 5 represents characteristics of voltage variation of a signal outputted from a sensor unit over elapsed time in accordance with the conventional illumination apparatus;
Fig. 6 represents characteristics of voltage variation of a signal outputted from an amplifier circuit unit over elapsed time in accordance with the conventional illumination apparatus;
Figs. 7A and 7B explain signal detection when threshold voltages of a control unit are set based on the noise generated during the turn-off state in accordance with the conventional illumination apparatus; and
Figs. 8A and 8B explain signal detection when threshold voltages of a control unit are set based on the noise generated during the turn-on state in accordance with the conventional illumination apparatus.

### Detailed Description of the Embodiments

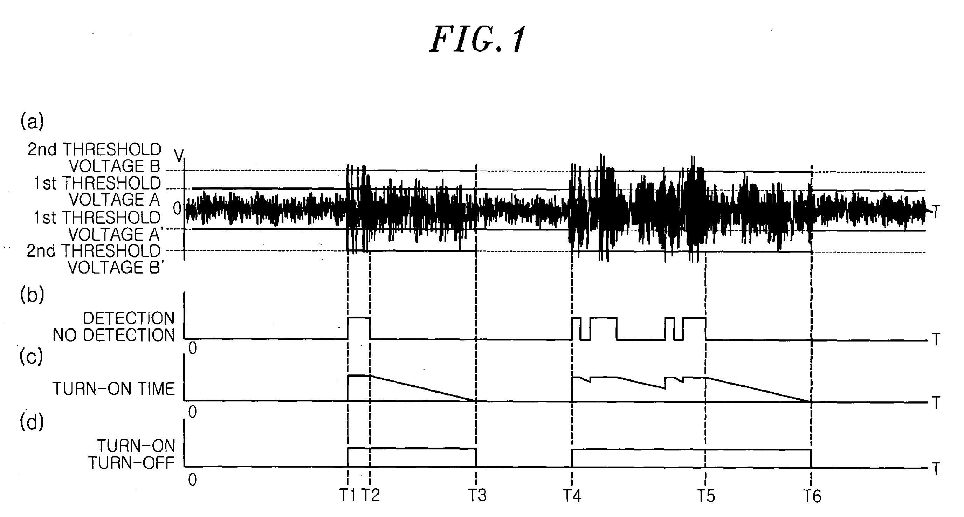

Hereinafter, an embodiment of the present invention will be described with reference to Figs. 1 to 3 which form a part hereof.

An illumination apparatus 1 in accordance with the embodiment of the present invention basically has the same configuration as that of the above-described conventional illumination apparatus 1 except threshold voltages of the control unit 6. Thus, the same reference numerals will be given to the same parts, and redundant description thereof will be omitted.

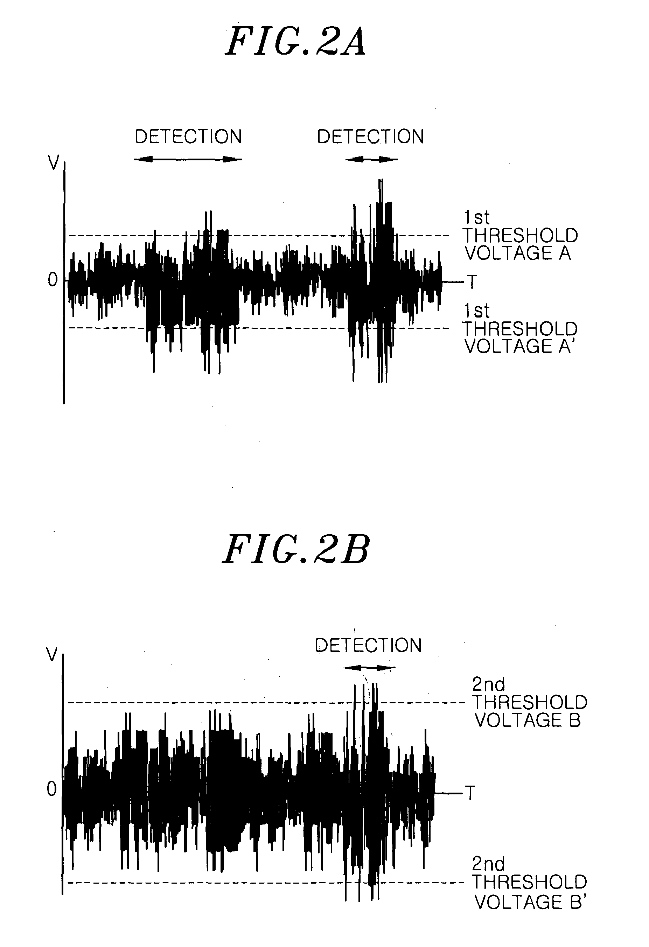

The illumination apparatus 1 in accordance with the embodiment of the present invention has a feature that the presence or absence of a human body is determined by applying first threshold voltages A and A' or second threshold voltages B and B' depending on the status of the turn-off or turn-on of the lamp load 2, magnitudes of the second threshold voltages B and B' being set to be higher than magnitudes of the first threshold voltages A and A. Specifically, the control unit 6 determines that a human body is present if a voltage of a detection signal outputted from a amplifier circuit unit 5 exceeds the first threshold voltages A and A' (that is, the magnitude of the voltage of the detection signal is greater than the magnitude of the first threshold voltage A or A') while the lighting circuit unit 3 is not being operated and the lamp load 2 is turned off as shown in Fig. 2A. Further, the control unit 6 determines that a human body is present if a voltage of a detection signal exceeds the second threshold voltages B and B' while the lighting circuit unit 3 is being operated and the lamp load 2 is turned on as shown in Fig. 2B. Further, the detection signal shown in Figs. 2A and 2B has positive and negative amplitudes with respect to a reference potential as in the conventional case. Further, the first threshold voltages A and A' and the second threshold voltages B and B' are respectively set in positive and negative voltage levels as represented by dotted lines in Figs. 2A and 2B. The first threshold voltages A and A' have a same magnitude, and the second threshold voltages B and B' have a same magnitude.

An operation of the illumination apparatus 1 will be described with reference to Fig. 1. Fig. 1 is a timing chart showing variations over elapsed time T, wherein (a) of Fig. 1 shows a variation of a voltage V of the noise and detection signal outputted from the sensor unit 4 through the amplifier circuit unit 5, (b) of Fig. 1 shows a variation of detection/no detection results of a human body obtained by the control unit 6, (c) shows a variation of the turn-on time of the lamp load 2, and (d) shows a variation of the status of the turn-on/off of the lamp load 2.

For example, during a time period from 0 to T1, no human body is present in a monitored region of the sensor unit 4. Accordingly, a detection signal with a voltage exceeding the first threshold voltages A and A' is not generated as' shown in (a) of Fig. 1. Thus, the determination by the control unit 6 continuously indicates 'no detection' of human body as shown in (b) of Fig. 1, and allows the lamp load 2 to remain 'turned off' as shown in (d) of Fig. 1.

However, at a time T1, a human body enters the monitored region of the sensor unit 4 and a detection signal with a voltage exceeding the first threshold voltages A and A' is generated as shown in (a) of Fig. 1. Accordingly, the determination by the control unit 6 indicates 'detection' of human body as shown in (b) of Fig. 1, and allows the lamp load 2 to be 'turned on' as shown in (d) of Fig. 1. Further, the control unit 6 shifts the threshold voltages from the first threshold voltages A and A' to the second threshold voltages B and B' as shown in (a) of Fig. 1. Further, a turn-on time (e.g., one minute) is set as shown in (c) of Fig. 1. Then, during a time period from T1 to T2, since the human body is continuously present in the monitored region of the sensor unit 4, a detection signal with a voltage exceeding the second threshold voltages B and B' is generated as shown in (a) of Fig. 1. Accordingly, the determination by the control unit 6 continuously indicates 'detection' of a human body and allows the lamp load 2 to remain 'turned on'. Further, during the time period from T1 to T2, the turn-on time set at the time T1 is substantially maintained by repeating countdown and retrigger as shown in (c) of Fig. 1.

At a time T2, the human body disappears from the monitored region of the sensor unit 4 and the detection signal with a voltage exceeding the second threshold voltages B and B' is not generated any more as shown in (a) of Fig. 1. Accordingly, the determination by the control unit 6 indicates 'no detection' of the human body as shown in (b) of Fig. 1. Then, during a time period from T2 to T3, the turn-on time is counted down without retrigger. Further, the control unit 6 does not immediately 'turn off' the lamp load 2 and allows the lamp load 2 to remain 'turned on' during the countdown of the turn-on time.

At a time T3, the turn-on time becomes zero as shown in (c) of Fig. 1. Accordingly, the control unit 6 allows the lamp load 2 to be 'turned off' as shown in (d) of Fig. 1. Further, the control unit 6 shifts the threshold voltages from the second threshold voltages B and B' to the first threshold voltages A and A' as shown in (a) of Fig. 1. Then, during a time period from T3 to T4, no human body enters the monitored region of the sensor unit 4, and the determination by the control unit 6 continuously indicates 'no detection' of human body and allows the lamp load 2 to remain 'turned off'.

At a time T4, a human body enters the monitored region of the sensor unit 4 again, and a detection signal with a voltage exceeding the first threshold voltages A and A' is generated as shown in (a) of Fig. 1. Accordingly, the determination by the control unit 6 indicates 'detection' of human body as shown in (b) of Fig. 1, and allows the lamp load 2 to be 'turned on' as shown in (d) of Fig. 1. Further, the control unit 6 shifts the threshold voltages from the first threshold voltages A and A' to the second threshold voltages B and B', and a turn-on time is set. Then, during a time period from T4 to T5, the human body frequently enters and leaves the monitored region of the sensor unit 4, and a number of detection signals with respective voltages exceeding the second threshold voltages B and B' are generated. The determination by the control unit 6 repeatedly indicates 'detection' and 'no detection' every time the human body enters and leaves the monitored region. Correspondingly, the turn-on time is repeatedly counted down and retriggered.

At a time T5, the human body disappears from the monitored region of the sensor unit 4 and the turn-on time is counted down without retrigger. At a time T6, the turn-on time becomes zero, and the control unit 6 allows the lamp load 2 to be 'turned off'. Further, the control unit 6 shifts the threshold voltages from the second threshold voltages B and B' to the first threshold voltages A and A' as shown in (a) of Fig. 1.

As described above, the illumination apparatus 1 in accordance with the embodiment of the present invention performs a detection with the first threshold voltages A and A' while the lamp load 2 is turned off and performs a detection with the second threshold voltages B and B' having the magnitudes higher than the magnitudes of the first threshold voltages A and A' while the lamp load 2 is turned on. Consequently, it is possible to prevent a detection error from occurring in the turn-on state and prevent detection sensitivity from deteriorating in the turn-off state. Therefore, it is possible to more accurately determine the presence of a human body regardless of status of the turn-on and turn-off of the lamp load 2, thereby improving reliability.

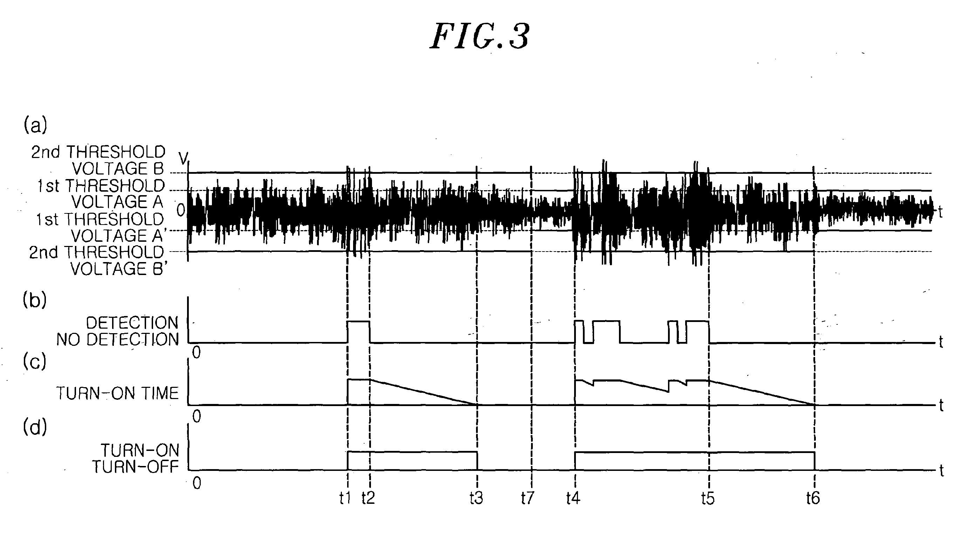

Meanwhile, conventionally, in addition to a problem that the noise overlapping with the signal during the turn-on of the lamp load 2 is larger than the noise overlapping with the signal during the turn-off of the lamp load 2, there is another problem that the noise increases temporarily or for a specific time period after the power supply unit 7 begins to supply power to each unit. In order to solve this problem, as shown in Fig. 3, during the specific time period (for example, from 0 to t7), the control unit 6 shifts the threshold voltages to the second threshold voltages B and B' regardless of the turn-on and turn-off of the lamp load 2, and determines the presence of a human body based on whether a voltage of a detection signal exceeds the second threshold voltages B and B'. Accordingly, a detection error caused by the noise generated right after the time when the power supply unit 7 begins to supply power can be prevented. Fig. 3 is a timing chart, similar to the timing chart shown in Fig. 1, showing variations over elapsed time T, wherein (a) to (d) of Fig. 3 show a variation of a voltage V, a,variation of detection/no detection, a variation of the turn-on time, and a variation of the status of the turn-on/off. Further, the power supply unit 7 begins to supply power to each unit at a time 0.

While the invention has been shown and described with respect to the embodiments, it will be understood by those skilled in the art that various changes and modification may be made without departing from the scope of the invention as defined in the following claims.

## Claims

1. An illumination apparatus comprising:
a lamp load;
a lighting circuit unit for turning on the lamp load;
a sensor unit for detecting a physical quantity varying based on presence or movement of a human body to output a detection signal having a voltage level corresponding to the physical quantity;
an amplifier circuit unit for amplifying the detection signal;
a control unit for controlling the lighting circuit unit to turn on or off the lamp load depending on presence or absence of a human body; and
a power supply unit for supplying power to each of the units,
wherein the control unit determines that a human body is present when a voltage of the amplified detection signal exceeds a first threshold voltage while the lighting circuit unit is not operated and the lamp load is turned off, and determines that a human body is present if a voltage of the amplified detection signal exceeds a second threshold voltage while the lighting circuit unit is operated and the lamp load is turned on, a magnitude of the second threshold voltage being set to be higher than a magnitude of the first threshold voltage.

2. The illumination apparatus of claim 1, wherein the control unit determines that a human body is present if a voltage of the amplified detection signal exceeds the second threshold voltage regardless of a status of turn-on and turn-off of the lamp load during a specific time period after the power supply unit begins to supply power to each of the units.
